# EUROPEAN PATENT APPLICATION

(11) **EP 3 470 365 A1**
(43) Date of publication of application: **17.04.2019**
(21) Application number: 18210712.8
(22) Date of filing: 28.10.2015
(51) Int. Cl.: B67D 7/34, B60K 15/04

(54) **LOCK FOR DIP TUBE OF A STORAGE TANK**

(62) Divisional of application: 15191928.9
(71) Applicant: TSE Fuelling Supplies B.V., 1271 TW Huizen (NL)
(72) Inventor: BUS, Petrus Johannes, 1261 KD Blaricum (NL)
(74) Representative: EP&C

(57) **Abstract**

A lock (10) for locking a dip tube of a fuel tank, the lock comprising:
- an end-piece (12) configured to be connected to an opening of the dip tube of the fuel tank, wherein the end-piece has a front opening (14) and a rear opening (15) and defines a through passage (16), the end-piece (12) comprising:
∘ a connector section (17) configured to be connected to the dip tube
∘ a seat (18) for accommodating a removable lock member (20),
∘ at least one locking rim (21) which forms a stop against an outward movement of a pivotable locking pin (22) of a lock member,

- the removable lock member (22) configured to be placed in the end-piece and to be removed from the end-piece, the removable lock member comprising:
∘ a front section (24) configured to rest in the seat (18), the front section (24) comprising a cavity (25) which accommodates a cylinder lock (26) configured to receive a key,
∘ a protruding part (25) which protrudes from a rear side (29) of the front section and comprises a pin cavity (30),
∘ the pivotable locking pin (22) being accommodated in the pin cavity and being connected to the cylinder lock, wherein the pivotable locking pin (22) is pivotable between:
▪ a locked position in which the locking pin (22) extends outwardly from the protruding part, and
▪ an open position in which the locking pin (22) is retracted in the pin cavity.

## Description

### FIELD OF THE INVENTION

The present invention relates to a lock for a dip tube of a storage tank, in particular an underground fuel tank.

### BACKGROUND OF THE INVENTION

Fuel has become relatively expensive over the years. For this reason, fuel theft has become commonplace and causes a lot of damage to owners and operators of fuel. In particular gas stations which are operated automatically and without a human operator are vulnerable for fuel theft. Underground fuel tanks in general are often targeted.

It was found that in particular the dip tube of an underground fuel tank is vulnerable. A dip tube or dip stick tube or gauge pipe provides access to a tank to check and or measure the level of the content by inserting a measuring device normally known as a dipstick. It also provides access to the tank to remove water/sludge or the possibilities to add chemicals like biocides or other additives. The dip tube is not intended to be used as fuel discharge pipe, and it is often not very well protected. However, a thief can obtain access to the contents of the storage tank via the dip tube.

A driver of a fuel delivery truck often needs to gauge the level in the fuel tank prior to, during or after the filling of the tank. Locks for dip tubes of fuel tanks exist, but are either rather primitive, extremely complex or rather cumbersome to operate.

One existing lock comprises a set of steel or stainless steel plates which prevent unauthorised access to the dip tube opening. For locking this set a disc lock is used. The disc lock is unprotected from dirt and water and gets easily blocked. Removing and replacing the plates is not that easy and requires some skill.

These problems may also be present in storage tanks containing other substances.

When storage tanks are provided with an automatic tank gauge and the dip tube is only used for removing water /sludge or bacteria or adding chemicals like biocides the frequency to open the dip tube is low. In those cases a strip or rod is inserted and fixed on the inside of the tube. It requires a technician with special tools to remove the strip or rod at considerable costs. Moreover, inserting metals like stainless steel in a carbon steel tank may induce internal corrosion.

### OBJECT OF THE INVENTION

It is an object of the invention to provide a lock for a dip tube of a storage tank which is free of at least one of the disadvantages of the locks of the prior art.

It is an object of the invention to provide a lock for a dip tube of a storage tank which does not damage the inside of the storage tank.

It is an object of the invention to provide a lock for a dip tube of a storage tank which provides an alternative to the prior art.

It is a further object to provide a relatively compact lock for a dip tube of a fuel tank, in particular an underground fuel tank.

It is an object of the invention to provide a lock for a dip tube of a storage tank, in particular an underground fuel tank, which is easy to use for the operator, in particular for a driver of a fuel supply truck.

### THE INVENTION

In order to achieve at least one object, the invention provides a lock for locking a dip tube of a storage tank, the lock comprising:
- an end-piece configured to be connected to an opening of the dip tube of the storage tank, wherein the end-piece has a front opening and a rear opening and defines a through passage, the end-piece comprising:
   ∘ a connector section configured to be connected to the dip tube,
   ∘ a seat for accommodating a removable lock member,
   ∘ at least one locking rim which forms a stop against an outward movement of a pivotable locking pin of a lock member,
- the removable lock member configured to be placed in the end-piece and to be removed from the end-piece, the removable lock member comprising:
   ∘ a front section configured to rest in the seat, the front section comprising a cavity which accommodates a cylinder lock configured to receive a key,
   ∘ a protruding part which protrudes from a rear side of the front section and comprises a pin cavity,
   ∘ the pivotable locking pin being accommodated in the pin cavity and being connected to the cylinder lock, wherein the pivotable locking pin is pivotable between:
      ▪ a locked position in which the locking pin extends outwardly from the protruding part, and
      ▪ an open position in which the locking pin is retracted in the pin cavity.

The lock according to the invention is compact and robust. Contrary to many separate locks like disc locks or padlocks, the lock according to the invention is stationary and is not loose. This makes the insertion of the key relatively easy. This improves the handling of the lock.

The storage tank may be a fuel tank. The storage tank may be an underground tank. The storage tank may in particular be an underground fuel tank. The storage tank may also hold other substances such as acetone or aromatics or any other substance which is valuable and/or costly and which may attract the interests of thieves.

The lock can be fitted on an existing dip tube of a storage tank.

The lock can be made in various embodiments. In an embodiment, the lock can be opened with a single hand. This makes the handling very easy. The end-piece and the removable lock member are separate parts.

The end-piece may be integral with a dip tube of a storage tank. The word "connected" is to be interpreted broadly in this respect.

In an embodiment, the front section comprises a base part and a cover device, wherein the base part defines a recess and wherein the cover device is positioned in the recess, wherein the cylinder cavity is defined by the cover device , by the base part and by the protruding part.

In an embodiment, the cover device is connected to the base part via one or more connecting members which extend from a rear side of the base part device into the cover device. In an embodiment, the connecting members are bolts or screws. The connecting members are inaccessible and prevent the cover device from being pulled from the base part.

In an embodiment, the recess of the base part has a recess bottom and wherein the base part has a rear surface, wherein the cover device has a rear side which engages the recess bottom and wherein the connecting members are inserted into the rear surface of the base part, through the base part and into the rear side of the cover device. This provides a very safe and robust configuration which is difficult to tamper with.

In an embodiment, the base part comprises an outer rim having an annular rim face, wherein the cover device comprises a front face, wherein the front face is substantially flush with the annular rim face or depressed over a distance off less than 5 mm, in particular less than 3 mm relative to the annular rim face.

In an embodiment, the end-piece comprises an end-piece rim and wherein when the lock member is positioned in the end-piece an annular rim face of the base part and the annular front surface of the cover device are depressed relative to the end-piece rim of the end-piece or flush with the end-piece rim of the end-piece.

In an embodiment, when viewed from the front, the end-piece and the lock member have a circular shape.

In an embodiment, an outer diameter of the front section is smaller than an inner diameter of the seat.

In an embodiment, the protruding part is integral with the base part. This creates a very strong lock member.

In an embodiment, the protruding part protrudes centrally from the base part of the front section.

In an embodiment, the protruding part has a smaller diameter than the base part of the front section.

In an embodiment, the protruding part comprises:
- a forward protruding section,
- an intermediate section and,
- a rear protruding section,
wherein the pin cavity is provided between the forward protruding part and the rear protruding part. This configuration is simple and strong.

In an embodiment, when viewed from the rear, the protruding part view has a substantially circular shape, in particular having one or more with two recesses which provide access to the connecting members.

In an embodiment, the pivotable locking pin is connected via a hinge to the protruding part.

In an embodiment, the lock member has a main axis and wherein the pivotable locking pin is pivotable about a pivot axis which is parallel to the main axis.

In an embodiment, the pivot axis of the locking pin is offset relative to the main axis of the lock member.

In an embodiment, when viewed in the direction of the main axis of the lock member and looking at the rear side of the lock member, in the open position the pivotable pin is located within a contour of the protruding part and wherein in the locked position the pivotable pin protrudes from said contour over a protruding distance.

In an embodiment, the end-piece is tubular and has a central axis. The end-piece may be rotationally symmetric about its central axis.

In an embodiment, when viewed from a front side a locking region into which the pivotable locking pin extends in the locking position is located behind the locking rim. This effectively provides a locking action.

In an embodiment, the seat is defined by a seat bottom and a wall of the end-piece having an inwardly facing surface. The inwardly facing surface of the seat may be cylindrical.

In an embodiment, the seat bottom is annular. The seat bottom may extend transverse to the central axis of the end-piece.

In an embodiment, the seat bottom extends around the upper central opening defined by the locking rim.
In an embodiment, the locking region for the locking pin is formed by an internal cavity which is defined by the locking rim which defines an upper central opening and by a lower internal rim which defines a lower central opening.

In an embodiment, the locking region of the end-piece is annular and extends around the main axis. This allows the lock member to be inserted in any orientation as long as its axis is aligned with the axis of the end-piece.

In an embodiment, the end-piece comprises lower thread near the rear opening, the lower thread being constructed to mate with thread on the dip tube of the storage tank.

In an embodiment, the lower thread is internal thread configured to mate with an external thread on the dip tube of the storage tank.

In an embodiment, the upper central opening which provides access to the locking region has a smaller diameter than the seat.

In an embodiment, the end-piece is made of brass, bronze, aluminium or stainless steel.

In an embodiment, the end-piece has external thread near the front opening and wherein the lock further comprises a cap having internal thread, the cap being configured to cover the end-piece and the lock member.

In an embodiment, the end-piece is connected to the dip tube of the storage tank, and metal adhesive is provided between the end-piece and the dip tube.

The present invention further relates to a method comprising:
- connecting the end-piece to a dip tube of a storage tank, in particular an underground fuel tank
- inserting the lock member in the seat of the end-piece, and
- locking the lock member by rotating the key.

The method provides the same advantages as the device according to the invention.

In an embodiment, the method comprises providing a metal adhesive onto the dip tube, and screwing the end-piece onto the dip tube.
In an embodiment, the lock is completely protected against ingress from water and dirt. This keeps the lock dry and clean.

In an embodiment the lock is protected against core-pulling. This is a standard operation in which a hole is drilled in the cylinder. A screw or other device is subsequently fixed in the drill hole and the cylinder is subsequently pulled from the lock. This standard lock picking method is effectively blocked.

These and other aspects of the invention will be more readily appreciated as the same becomes better understood by reference to the following detailed description and considered in connection with the accompanying drawings in which like reference symbols designate like parts.

### BRIEF DESCRIPTION OF THE FIGURES

Figure 1 shows a partial cross-section in side view of the lock according to the invention.
Figure 2 shows a partial cross-section in side view of the lock member without a cover plate.
Figure 3 shows a front view of the lock member without a cover plate.
Figure 4 shows a front view of the cover device.
Figure 5 shows a side view of the cover device.
Figure 6 shows a rear view of the cover device.
Figure 7 shows a diagrammatic side view of an arrangement of the lock of the present invention on a dip tube of a storage tank.

### DETAILED DESCRIPTION OF THE FIGURES

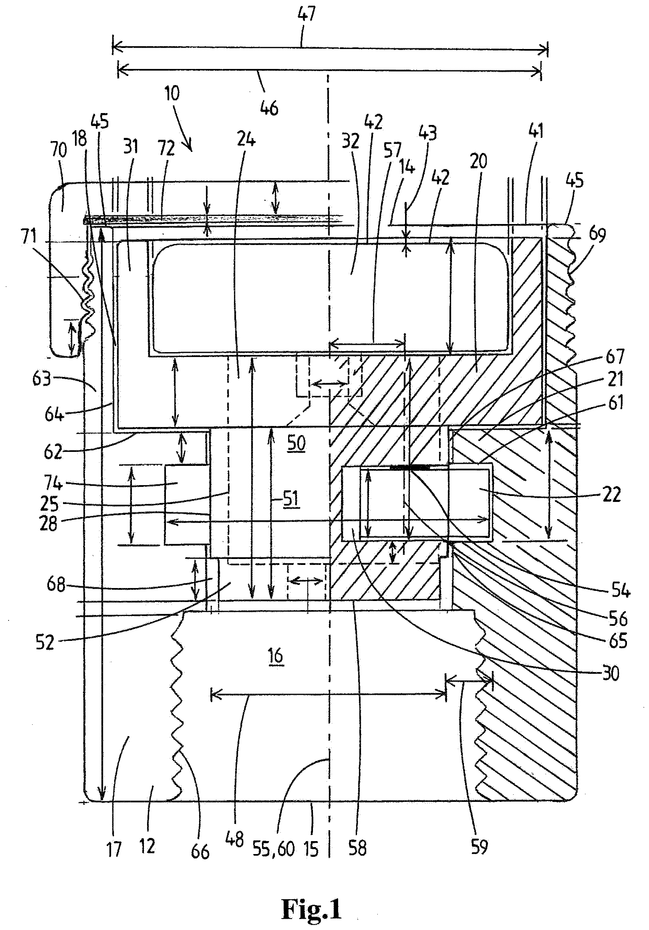

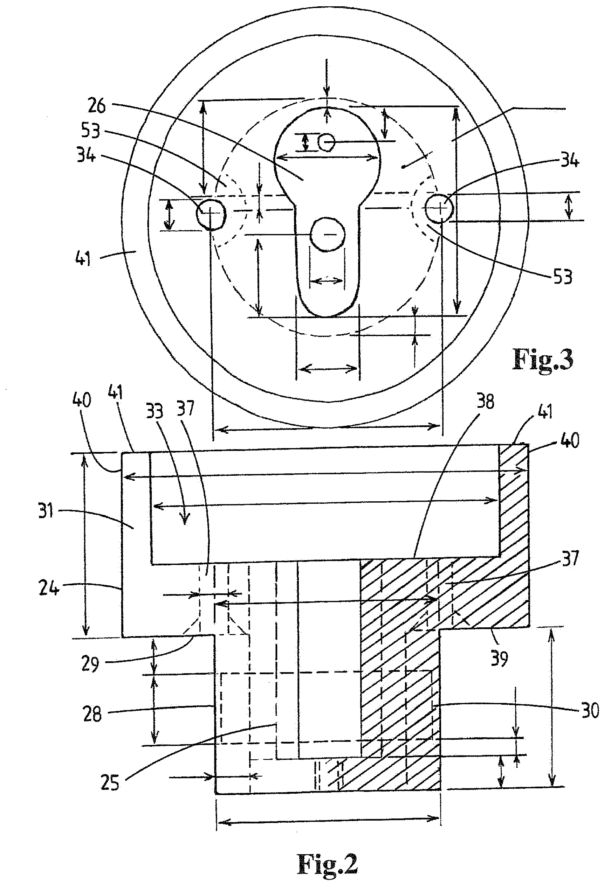

Turning to figures 1, 2 and 3 a lock 10 for a dip tube of a storage tank is shown. The invention is in particular suitable for underground fuel tanks but may also be used for other kinds of storage tanks. The lock comprises an end-piece 12 configured to be connected to an opening of a dip tube of the fuel tank.

The end-piece 12 has a front opening 14 and a rear opening 15 and defines a through passage 16. The end-piece 12 comprise a connector section 17 at the rear opening configured to be connected to the opening of the fuel tank.

The end-piece 12 has a seat 18 for accommodating a removable lock member 20. Figure 1 shows the removable lock member in the seat. The end-piece further has at least one locking rim 21 which forms a stop against an outward movement of a pivotable locking pin 22 of the removable lock member 20.

The removable lock member 20 is configured to be placed in the end-piece 12 and to be removed from the end-piece when the lock is unlocked. The removable lock member comprises a front section 24 configured to rest in the seat. The front section comprises a cavity 25 which accommodates a cylinder lock 26 configured to receive a key.

The removable lock member 20 comprises a protruding part 28 which protrudes from a rear side 29 of the front section 24 and comprises a pin cavity 30. The pivotable locking pin 22 is accommodated in the pin cavity 30 and is connected to the cylinder lock 26. The pivotable locking pin 22 is pivotable between a locked position in which the locking pin extends outwardly from the protruding part and an open position in which the locking pin is retracted in the pin cavity. Figure 1 shows the locking pin 22 in the locked position

The front section 24 comprises a base part 31 and a cover device 32, wherein the base part defines a recess 33 and wherein the cover device is positioned in the recess, wherein the cylinder cavity 25 is defined in the cover device 32, by the base part 31 and by the protruding part 28. The cylinder cavity 25 extends in all these three parts.

The cover device 32 is connected to the base part 31via one or more connecting members 34 which extend from a rear side 35 of the base part 31 into the cover device 32. The connecting members 34 are bolts or screws. The cover device may have receiving stumps 36 for receiving the connecting members 34. Through openings 37 are provided in the base part for the connecting members 34.

The recess 33 of the base part has a recess bottom 38. The base part has a rear surface 39, which is the same surface as the rear surface 29 of the front section. The cover device has a rear surface 35 which engages the recess bottom 38. The connecting members 34 are inserted into the rear surface 39 of the base part 31 and into the rear surface 35 of the cover device, possibly into the stumps 36 on the rear side.

The base part 31 comprises an outer rim 40 having an annular rim face 41. The cover device 32 comprises a front face 42. The front face 42 is substantially flush with the annular rim face 41 or depressed over a distance 43 off less than 3 mm relative to the annular rim face.

The end-piece 12 comprises an end-piece rim 45. The lock member 20 is positioned in the end-piece. The annular rim face 41 of the base part and the annular front surface 42 of the cover device are depressed relative to the end-piece rim 45 of the end-piece or flush with the end-piece rim 45 of the end-piece. When viewed from the front, the end-piece 12 and the lock member 20 have a circular shape.

An outer diameter 46 of the front section is smaller than an inner diameter 47 of the seat.

### Protruding part

The protruding part 28 is integral with the base part 31. The protruding part protrudes centrally from the base part 31 of the front section. The protruding part 28 has a smaller diameter 48 than the base part 31 of the front section.

The protruding part comprises a forward protruding section 50, an intermediate section 51 and a rear protruding section 52. The terms "forward" and "rear" are defined from the users standpoint. The pin cavity 30 is provided between the forward protruding part and the rear protruding part and is adjacent the intermediate section 51.

When viewed from the rear, the protruding part 28 has a substantially circular shape and has one or more in particular two recesses 53 which provide access to the connecting members.

### Pivotable pin

The pivotable locking pin 22 is connected via a hinge 54 to the protruding part 28. The lock member 20 has a main axis 55 and the pivotable locking pin 22 is pivotable about a pivot axis 56 which is parallel to the main axis 55. The pivot axis 56 of the locking pin is offset relative to the main axis 55 of the lock member over a distance 57.

When viewed in the direction of the main axis 55 of the lock member and looking at the rear side 58 of the lock member, in the open position the pivotable pin 22 is located within a contour of the protruding part 31 and in the locked position the pivotable pin 22 protrudes from said contour over a protruding distance 59.

### End-piece

The end-piece 12 is tubular and has a central axis 60 which is aligned with the main axis 55 of the lock member 20. The end-piece 12 is rotationally symmetric about its central axis 60. When viewed from the front side, a locking region 61 into which the pivotable locking pin extends in the locking position is located behind the locking rim 21.

The seat 18 is defined by the seat bottom 62 and a wall 63 of the end-piece having an inwardly facing surface 64. The inwardly facing surface 64 of the seat is cylindrical. The seat bottom 62 is annular. The seat bottom extends transverse to the central axis of the end-piece. The seat bottom 62 extends around an upper central opening 67 defined by the locking rim. The upper central opening which provides access to the locking region 61 has a smaller diameter than the seat.

The locking region 61 for the locking pin is formed by an internal cavity 74 which is defined by the locking rim 21 which defines an upper central opening in the end piece 12 and by a lower internal rim 65 which defines a lower central opening 68 in the end piece 12.

The locking region 61 of the end-piece is annular and extends around the main axis 55.

The end-piece 12 comprises lower thread 66 near the rear opening, the lower thread is constructed to mate with thread on the dip tube of the fuel tank. The lower thread 66 is internal thread configured to mate with an external thread on the dip tube of the fuel tank.

The end-piece 12 is preferably made of brass. The end-piece has external thread 69 near the front opening and the lock further comprises a cap 70 having internal thread 71. The cap is configured to cover the end-piece and the lock member and prevents ingress of rain and dirt. The cap 70 has a rubber gasket 72 for providing good closure of the lock. The gasket engages the end-piece rim 45.

The end-piece 12 is connected to the opening of the dip tube of the fuel tank, and wherein a metal adhesive is provided between the end-piece 12 and the opening of the dip tube to secure the end-piece onto the dip tube.

### Cover device

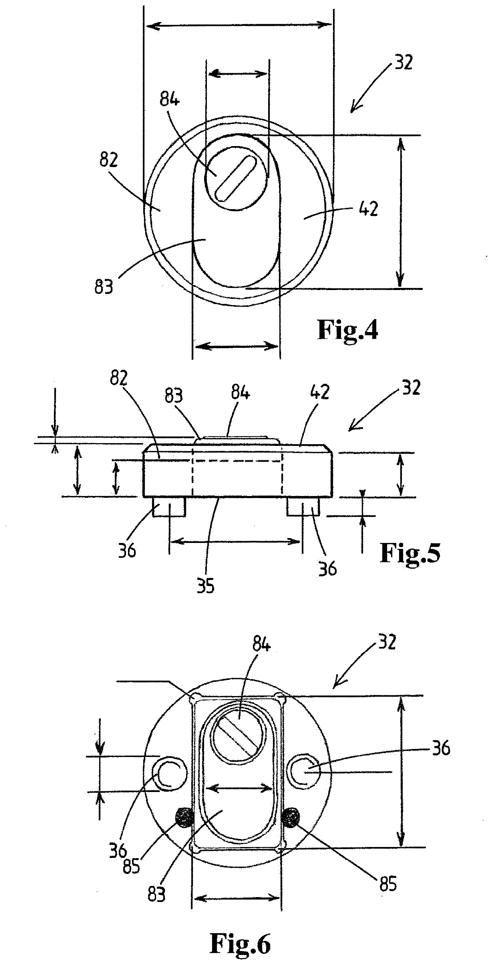

Turning in particular to figures 4, 5 and 6, the cover device 32 comprises a cover plate 82 which defines the front face 42. The cover device 32 comprises a raised plate 83 which is raised relative to the cover plate 82. The raised plate 83 houses a rotatable keyhole plate 84. If a thief tries to drill into the cylinder in order to pull it out, the rotatable keyhole plate will rotate with the drill and prevent this from happening.

The cover device further comprises resilient elements 85 which are made from rubber. The connecting member 34 which are inserted into the stumps 36 pull the cover device against the recess bottom 38.

### Overall arrangement and operation

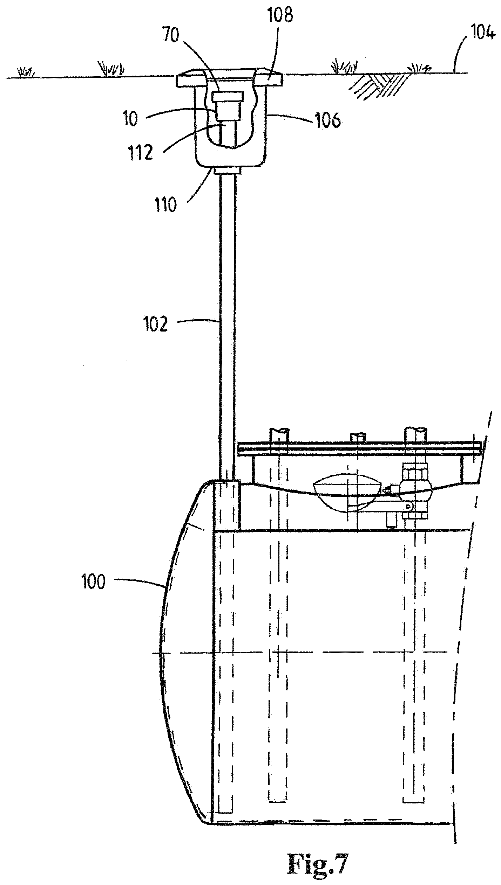

Turning to figure 7, a storage tank 100 is shown. The storage tank 100 is located underground. A vertical dip tube 102 extends in an upward direction from the storage tank.

At the ground surface 104 a monitoring well 106 is provided having a lid 108. Inside the monitoring well, the dip tube 102 projects in an upward direction through the bottom wall 110 of the monitoring well 106. The lock 10 of the present invention is connected to a free end 112 of the dip tube 102 as described above in connection with figures 1-6.

In operation, the end-piece 12 is connected to the dip tube 102 of the fuel tank 100. A metal adhesive may be provided on the dip tube of the fuel tank, and the end-piece 12 is screwed onto the free end 112 of the dip tube.

The lock member 20 is inserted in the seat 18 of the end-piece and the lock member 20 is locked by rotating the key, thereby rotating the cylinder and the pivotable locking pin. When the lock needs to be opened, the key is rotated in the opposite direction, thereby pivoting the pivotable locking pin 22 to the open position and the lock member 20 is removed from the seat.

The terms "a" or "an", as used herein, are defined as one or more than one. The term plurality, as used herein, is defined as two or more than two. The term another, as used herein, is defined as at least a second or more. The terms including and/or having, as used herein, are defined as comprising i.e., open language, not excluding other elements or steps.

Any reference signs in the claims should not be construed as limiting the scope of the claims or the invention. It will be recognized that a specific embodiment as claimed may not achieve all of the stated objects.

The mere fact that certain measures are recited in mutually different dependent claims does not indicate that a combination of these measures cannot be used to advantage.

The disclosure comprises embodiments according to the following numbered clauses:
Clause 1. Lock (10) for locking a dip tube of a storage tank, the lock comprising:
   - an end-piece (12) configured to be connected to an opening of the dip tube of the storage tank, wherein the end-piece has a front opening (14) and a rear opening (15) and defines a through passage (16), the end-piece comprising:
      ∘ a connector section (17) configured to be connected to the dip tube,
      ∘ a seat (18) for accommodating a removable lock member (20),
      ∘ at least one locking rim (21) which forms a stop against an outward movement of a pivotable locking pin (22) of a lock member,
   - the removable lock member (20) configured to be placed in the end-piece and to be removed from the end-piece, the removable lock member comprising:
      ∘ a front section (24) configured to rest in the seat, the front section comprising a cavity (25) which accommodates a cylinder lock (26) configured to receive a key,
      ∘ a protruding part (25) which protrudes from a rear side (29) of the front section and comprises a pin cavity (30),
      ∘ the pivotable locking pin (22) being accommodated in the pin cavity and being connected to the cylinder lock, wherein the pivotable locking pin is pivotable between:
         ▪ a locked position in which the locking pin extends outwardly from the protruding part, and
         ▪ an open position in which the locking pin is retracted in the pin cavity.
Clause 2. Lock according to any of the preceding clauses, wherein the front section comprises a base part (31) and a cover device (32), wherein the base part defines a recess (33) and wherein the cover device is positioned in the recess, wherein the cylinder cavity is defined by the cover device (32), by the base part (31) and by the protruding part (28).
Clause 3. Lock according to any of the preceding clauses, wherein the cover device is connected to the base part via one or more connecting members (34) which extend from a rear side of the base part device into the cover device.
Clause 4. Lock according to any of the preceding clauses, wherein the connecting members are bolts or screws.
Clause 5. Lock according to any of the preceding clauses, wherein the recess (33) of the base part has a recess bottom (38) and wherein the base part has a rear surface (39), wherein the cover device has a rear side (35) which engages the recess bottom and wherein the connecting members are inserted into the rear surface (39) of the base part, through the base part and into the rear side (35) of the cover device (32).
Clause 6. Lock according to any of the preceding clauses, wherein the base part (31) comprises an outer rim (40) having an annular rim face (40), wherein the cover device (32) comprises a front face (42), wherein the front face is substantially flush with the annular rim face or depressed over a distance off less than 5 mm, in particular less than 3 mm relative to the annular rim face.
Clause 7. Lock according to any of the preceding clauses, wherein the end-piece (12) comprises an end-piece rim (45) and wherein when the lock member is positioned in the end-piece an annular rim face (41) of the base part (31) and the annular front surface (42) of the cover device (32) are depressed relative to the end-piece rim (45) of the end-piece or flush with the end-piece rim (45) of the end-piece.
Clause 8. Lock according to any of the preceding clauses, wherein when viewed from the front, the end-piece and the lock member have a circular shape.
Clause 9. Lock according to any of the preceding clauses, wherein an outer diameter (46) of the front section is smaller than an inner diameter (47) of the seat.
Clause 10. Lock according to any of the preceding clauses, wherein the protruding part is integral with the base part.
Clause 11. Lock according to any of the preceding clauses, wherein the protruding part protrudes centrally from the base part of the front section.
Clause 12. Lock according to any of the preceding clauses, wherein the protruding part has a smaller diameter than the base part of the front section.
Clause 13. Lock according to any of the preceding clauses, wherein the protruding part comprises:
   - a forward protruding section (50),
   - an intermediate section and (51),
   - a rear protruding section (52),
   wherein the pin cavity is provided between the forward protruding part and the rear protruding part.
Clause 14. Lock according to any of the preceding clauses, wherein when viewed from the rear, the protruding part view has a substantially circular shape, in particular having one or more with two recesses (53) which provide access to the connecting members.
Clause 15. Lock according to any of the preceding clauses, wherein the pivotable locking pin is connected via a hinge (54) to the protruding part.
Clause 16. Lock according to any of the preceding clauses, wherein the lock member has a main axis (55) and wherein the pivotable locking pin is pivotable about a pivot axis (56) which is parallel to the main axis.
Clause 17. Lock according to any of the preceding clauses, wherein the pivot axis (56) of the locking pin is offset relative to the main axis (55) of the lock member.
Clause 18. Lock according to any of the preceding clauses, wherein when viewed in the direction of the main axis of the lock member and looking at the rear side (58) of the lock member, in the open position the pivotable pin is located within a contour of the protruding part and wherein in the locked position the pivotable pin protrudes from said contour over a protruding distance (59).
Clause 19. Lock according to any of the preceding clauses, wherein the end-piece is tubular and has a central axis (60).
Clause 20. Lock according to any of the preceding clauses, wherein the end-piece is rotationally symmetric about its central axis (60).
Clause 21. Lock according to any of the preceding clauses, wherein when viewed from a front side a locking region into which the pivotable locking pin extends in the locking position is located behind the locking rim.
Clause 22. Lock according to any of the preceding clauses, wherein the seat is defined by a seat bottom (62) and a wall (63) of the end-piece having an inwardly facing surface (64).
Clause 23. Lock according to clause 22, wherein the inwardly facing surface (64) of the seat is cylindrical.
Clause 24. Lock according to clause 22 or 23, wherein the seat bottom (62) is annular.
Clause 25. Lock according to any of clauses 22-24, wherein the seat bottom extends transverse to the central axis of the end-piece.
Clause 26. Lock according to any of clauses 22-25, wherein the seat bottom extends around the upper central opening defined by the locking rim (21).
Clause 27. Lock according to any of the preceding clauses, wherein the locking region (61) for the locking pin is formed by an internal cavity (74) which is defined by the locking rim (21) which defines an upper central opening (67) and by a lower internal rim (65) which defines a lower central opening (68).
Clause 28. Lock according to any of the preceding clauses, wherein the locking region of the end-piece is annular and extends around the main axis.
Clause 29. Lock according to any of the preceding clauses, wherein the end-piece comprises lower thread near the rear opening, the lower thread being constructed to mate with thread on the dip tube of the storage tank.
Clause 30. Lock according to any of the preceding clauses, wherein the lower thread (66) is internal thread configured to mate with an external thread on the dip tube of the storage tank.
Clause 31. Lock according to any of the preceding clauses, wherein the upper central opening which provides access to the locking region has a smaller diameter than the seat (18).
Clause 32. Lock according to any of the preceding clauses, wherein the end-piece is made of brass, bronze, aluminium or stainless steel.
Clause 33. Lock according to any of the preceding clauses, wherein the end-piece has external thread (69) near the front opening and wherein the lock further comprises a cap having internal thread, the cap being configured to cover the end-piece and the lock member.
Clause 34. Lock according to any of the preceding clauses, wherein the end-piece is connected to the dip tube of the storage tank, and wherein a metal adhesive is provided between the end-piece and the dip tube.
Clause 35. Tank, in particular a fuel tank, more in particular an underground fuel tank, comprising a lock according to any of the preceding clauses.
Clause 36. Method of providing a lock on a dip tube of a storage tank, the method comprising:
   - connecting the end-piece (12) to a dip tube of a storage tank, in particular an underground fuel tank
   - inserting the lock member in the seat (18) of the end-piece, and
   - locking the lock member by rotating the key.
Clause 37. Method of providing a lock on dip tube of a storage tank, the method comprising providing a metal adhesive onto the dip tube, and screwing the end-piece (12) onto the dip tube.
Clause 38. Method of clause 36 or 37, wherein the storage tank is a fuel tank.
Clause 39. Method of any of clauses 36 - 38, wherein the storage tank is an underground tank.

## Claims

1. Lock (10) for locking a dip tube of a storage tank, the lock comprising:
- an end-piece (12) configured to be connected to an opening of the dip tube of the storage tank, wherein the end-piece has a front opening (14) and a rear opening (15) and defines a through passage (16), the end-piece comprising:
∘ a connector section (17) configured to be connected to the dip tube,
∘ a seat (18) for accommodating a removable lock member (20),
∘ at least one locking rim (21) which forms a stop against an outward movement of a pivotable locking pin (22) of a lock member,
- the removable lock member (20) configured to be placed in the end-piece and to be removed from the end-piece, the removable lock member comprising:
∘ a front section (24) configured to rest in the seat, the front section comprising a cavity (25) which accommodates a cylinder lock (26) configured to receive a key,
∘ a protruding part (25) which protrudes from a rear side (29) of the front section and comprises a pin cavity (30),
∘ the pivotable locking pin (22) being accommodated in the pin cavity and being connected to the cylinder lock, wherein the pivotable locking pin is pivotable between:
▪ a locked position in which the locking pin extends outwardly from the protruding part, and
▪ an open position in which the locking pin is retracted in the pin cavity.

2. Lock according to any of the preceding claims, wherein the locking region of the end-piece is annular and extends around a main axis (55) of the lock member.

3. Lock according to any of the preceding claims, wherein the protruding part comprises:
- a forward protruding section (50),
- an intermediate section (51), and
- a rear protruding section (52),
wherein the pin cavity is provided between the forward protruding part and the rear protruding part.

4. Lock according to any of the preceding claims, wherein when viewed in the direction of the main axis of the lock member and looking at the rear side (58) of the lock member, in the open position the pivotable pin is located within a contour of the protruding part and wherein in the locked position the pivotable pin protrudes from said contour over a protruding distance (59).

5. Lock according to any of the preceding claims, wherein when viewed from the rear, the protruding part view has a substantially circular shape, in particular having one or more, in particular two, recesses (53) which provide access to the connecting members.

6. Lock according to any of the preceding claims, wherein the pivot axis (56) of the locking pin is offset relative to the main axis (55) of the lock member.

7. Lock according to any of the preceding claims, wherein when viewed from a front side a locking region into which the pivotable locking pin extends in the locking position is located behind the locking rim.

8. Lock according to any of the preceding claims, wherein the locking region (61) for the locking pin is formed by an internal cavity (74) which is defined by the locking rim (21) which defines an upper central opening (67) and by a lower internal rim (65) which defines a lower central opening (68).

9. Lock according to any of the preceding claims, wherein the front section comprises a base part (31) and a cover device (32), wherein the base part defines a recess (33) and wherein the cover device is positioned in the recess, wherein the cylinder cavity is defined by the cover device (32), by the base part (31) and by the protruding part (28).

10. Lock according to any of the preceding claims, wherein the cover device is connected to the base part via one or more connecting members (34) which extend from a rear side of the base part device into the cover device.

11. Lock according to any of the preceding claims, wherein the recess (33) of the base part has a recess bottom (38) and wherein the base part has a rear surface (39), wherein the cover device has a rear side (35) which engages the recess bottom and wherein the connecting members are inserted into the rear surface (39) of the base part, through the base part and into the rear side (35) of the cover device (32).

12. Lock according to any of the preceding claims, wherein the end-piece (12) comprises an end-piece rim (45) and wherein when the lock member is positioned in the end-piece an annular rim face (41) of the base part (31) and an annular front surface (42) of the cover device (32) are depressed relative to the end-piece rim (45) of the end-piece or flush with the end-piece rim (45) of the end-piece.

13. Lock according to any of the preceding claims, wherein the end-piece comprises lower thread near the rear opening, the lower thread being constructed to mate with thread on the dip tube of the storage tank.

14. Tank, in particular a fuel tank, more in particular an underground fuel tank, comprising a lock according to any of the preceding claims.

15. Method of providing a lock on a dip tube of a storage tank, the method comprising:
- connecting the end-piece (12) to a dip tube of a storage tank, in particular an underground fuel tank
- inserting the lock member in the seat (18) of the end-piece, and
- locking the lock member by rotating the key.
